# EUROPÄISCHE PATENTSCHRIFT

(11) **EP 2 625 062 B1**
(45) Veröffentlichungstag und Bekanntmachung des Hinweises auf die Patenterteilung: **03.06.2020**
(21) Anmeldenummer: 11778543.6
(22) Anmeldetag: 05.10.2011
(51) Int. Cl.: B60N 2/07

(54) **LÄNGSVERSTELLEINRICHTUNG FÜR EINEN KRAFTFAHRZEUGSITZ**
LONGITUDINAL ADJUSTMENT DEVICE FOR A MOTOR VEHICLE SEAT
DISPOSITIF DE RÉGLAGE EN POSITION LONGITUDINALE POUR UN SIÈGE DE VÉHICULE

(30) Priorität: 05.10.2010 DE 102010042008
(43) Veröffentlichungstag der Anmeldung: 14.08.2013
(73) Patentinhaber: Adient Luxembourg Holding S.à r.l., 1855 Luxembourg (LU)
(72) Erfinder: SPECK, Axel, 42781 Haan (DE); ECKHOFF, Sascha, 42799 Leichlingen (DE); HOPPE, Jens, 42853 Remscheid (DE)
(74) Vertreter: Liedhegener, Ralf
(86) Internationale Anmeldenummer: PCT/EP2011/067396
(87) Internationale Veröffentlichungsnummer: WO 2012/045778

(56) Entgegenhaltungen:
- DE-A1- 3 630 680
- DE-A1- 10 040 593
- DE-A1- 19 918 622
- FR-A1- 2 910 393
- US-A1- 2007 096 494
- US-B1- 7 780 138

## Beschreibung

Die Erfindung betrifft eine Längsverstelleinrichtung für einen Kraftfahrzeugsitz, mit einer mit einem Kraftfahrzeugboden verbindbaren Bodenschiene und einer mit dem Kraftfahrzeugsitz verbindbaren Sitzschiene, die längsverschiebbar an der Bodenschiene gelagert ist und ein einen Verbindungsabschnitt aufweisendes Anschlusselement zur Verbindung eines Funktionsbauteils mit der Sitzschiene aufweist.

Längsverstelleinrichtungen der eingangs genannten Art dienen zur längenverstellbaren Anordnung eines Fahrzeugsitzes an einem Fahrzeugboden eines Kraftfahrzeugs. Die mit dem Fahrzeugsitz verbindbare Sitzschiene ist dabei an der mit dem Fahrzeugboden verbindbaren Bodenschiene längsverschiebbar gelagert, so dass eine Verstellung des Fahrzeugsitzes zwischen einer vorderen und hinteren Position durch eine Verstellung der Sitzschiene zwischen deren vorderer und hinterer Endlage erfolgt. Die Schienen einer Längsverstelleinrichtung stehen dabei üblicherweise nur in den Führungsbereichen über geeignete Gleit- und/oder Rollkörper miteinander in Kontakt und sind ansonsten im Abstand voneinander angeordnet.

Dem ständigen Optimierungsdruck hinsichtlich des Bauraums folgend dienen bekannte Längsverstelleinrichtungen mittlerweile nicht mehr nur der verstellbaren Anordnung des Kraftfahrzeugsitzes im Kraftfahrzeug. So ist es bspw. bereits üblich, die Sitzschiene derart auszubilden, dass sie die Anbindung eines Funktionsbauteils, bspw. einer Schwinge erlaubt. Hierzu wird vorzugsweise auf der Sitzschiene ein Schwingenhalter befestigt oder aber die Schwinge wird über seitliche Ausnehmungen an der Sitzschiene mit dieser drehgelenkig verbunden. Derartige Anbindungen von Funktionsbauteilen wie die von Schwingen weisen Nachteile auf. So folgt aus der Verwendung eines auf die Sitzschiene aufgesetzten Schwingenhalters u. a. ein erhöhtes Packmaß. Eine seitliche Anbringung mit hierfür vorgesehenen Ausnehmungen hat zur Folge, dass die Belastung im Normalbetrieb, aber auch im Crashfall nicht verteilt auf die Schienen erfolgt, sondern einseitig auf die Seite der Sitzschiene, die für die seitliche Anbindung vorgesehen ist.

Aus der DE 3 630 680 A1 ist eine Sitzverstellung mit Gurtverankerungselement an einer Längsverstellungsschiene für einen Kraftfahrzeugsitz bekannt, wobei das Gurtverankerungselement auf eines der Enden der Längsverstellungsschiene in Schienenlängsrichtung unter Bildung einer Formschlussverbindung zwischen Gurtverankerungselement und Längsverstellungsschiene bezüglich zur Schienenlängsrichtung senkrechter Kräfte aufgesteckt ist.

Aus der DE 199 18 622 A1 ist eine Gleitschiene für Fahrzeugsitze bekannt, welche ein festes Profil, ein bewegliches Profil, das auf dem festen Profil gleitet, und einen Riegel, der vertikal zwischen einer verriegelten Position und einer entriegelten Position bewegbar ist und das Gleiten des beweglichen Profils ermöglicht, aufweist. Der Riegel wird durch eine starre Stange in Form einer Kurbelwelle gesteuert, die an dem beweglichen Profil schwenkt, und die in einer geneigten Kerbe gleitet, die mit einer quer auf dem beweglichen Profil bewegbaren Kulisse verbunden ist.

Aus der FR 2 910 393 A1 ist eine Gleitschiene für Fahrzeugsitz bekannt, umfassend ein erstes Gleitschienenelement und ein zweites Gleitschienenelement, die entlang einer longitudinalen Richtung verschiebbar mit Bezug zueinander montiert sind und zwischen ihnen einen inneren Raum begrenzen, wobei das erste Gleitschienenelement ein Profil umfasst, das ein seitliches Fenster aufweist, das den inneren Raum mit den äußeren verbindet; eine Einstellvorrichtung, die geeignet ist, das erste und das zweite Gleitschienenelement mit Bezug zueinander verschieben zu lassen, wobei die Einstellvorrichtung eine Schraube, die sich entlang der longitudinalen Richtung im inneren Raum erstreckt und die am zweiten Gleitschienenelement montiert ist, eine an der Schraube in Eingriff befindliche Mutter, eine steife Haltevorrichtung, die die Mutter aufnimmt und die mit dem ersten Gleitschienenelement fest verbunden ist, umfasst, wobei die Haltevorrichtung das seitliche Fenster durchquert und einen Basisabschnitt umfasst, der in dem inneren Raum angeordnet ist, und einen externen Abschnitt, der bezüglich des seitlichen Fensters hervorsteht, wobei das seitliche Fenster und der Basisabschnitt der Haltevorrichtung ausgelegt sind, um das Einführen des Basisabschnitts der Haltevorrichtung in den inneren Raum durch das seitliche Fenster zu erlauben, wobei die Gleitschiene wobei der externe Abschnitt der Haltevorrichtung zumindest ein Verbindungselement umfasst, das mit Bezug auf das Profil des ersten Gleitschienenelements entlang einer transversalen, zur longitudinalen Richtung senkrechten Richtung angeordnet ist.

Aus der US 7 780 138 B1 ist eine Sitzschienenanordnung bekannt, umfassend eine stationäre Schiene; eine bewegliche Schiene, die innerhalb der stationären Schiene angeordnet ist und die beweglich mit der stationären Schiene gekoppelt ist; ein Verriegelungselement, das drehbar innerhalb der beweglichen Schiene angeordnet ist und das die bewegliche Schiene mit der stationären Schiene verriegelt; ein elastisches Verbindungsglied, das innerhalb der beweglichen Schiene angebracht ist und ein Wellenstützteil aufweist, um das Verriegelungselement drehbar zu halten, und ein elastisches Druckteil, um das Verriegelungselement in einer Richtung zu drehen; sowie eine Entriegelungseinrichtung, die einen Betätigungsstift aufweist, der durch eine äußere Kraft verschiebbar ist und das Verriegelungselement in die andere Richtung dreht, um eine Verriegelung zwischen der beweglichen Schien und der stationären Schiene freizugeben, wobei auf der beweglichen Schiene ein Verbindungsblock angebracht ist, um den Betätigungsstift zu führen.

Hiervon ausgehend liegt der Erfindung die Aufgabe zugrunde, eine Längsverstelleinrichtung bereitzustellen, die eine stabile Anbindung eines Funktionsbauteils, insbesondere einer Schwinge, erlaubt.

Die Erfindung löst die Aufgabe durch eine Längsverstelleinrichtung mit den Merkmalen des Anspruchs 1. Vorteilhafte Weiterbildungen der Erfindung sind in den abhängigen Ansprüchen angegeben.

Kennzeichnend für die erfindungsgemäße Längsverstelleinrichtung ist, dass das Anschlusselement mit einem ersten Abschnitt mit einer Seitenwand der Sitzschiene und mit einem zweiten Abschnitt mit einer Oberseite der Sitzschiene verbunden ist. Die Sitzschiene der Längsverstelleinrichtung weist eine Oberseite auf. Die Seitenwand der Sitzschiene erstreckt sich - bezogen auf die Einbaulage im Kraftfahrzeug - in im Wesentlichen vertikaler Richtung zwischen dem Kraftfahrzeugsitz und dem Fahrzeugboden. Das Anschlusselement, welches zur Befestigung eines beliebigen Funktionsbauteils an der Sitzschiene, insbesondere einer Schwinge dient, weist einen ersten Abschnitt auf, welcher mit der Seitenwand der Sitzschiene verbunden ist und einen zweiten Abschnitt auf, der mit der Oberseite der Sitzschiene verbunden ist.

Gemäß der Erfindung weist das Anschlusselement einen den ersten Abschnitt aufweisenden Grundkörper mit einer Grundebene und einen sich an den Grundkörper anschließenden, versetzt zur Grundebene verlaufenden, den zweiten Abschnitt aufweisenden Steg auf, wobei der Grundkörper mit einer parallel zur Grundebene verlaufenden Anlagefläche an der Seitenwand und der Steg mit einer senkrecht zur Grundebene verlaufenden Innenkante an der Oberseite anliegt.

Die erfindungsgemäße Anbindung des Anschlusselements über zwei versetzt zueinander angeordnete Flächen der Sitzschiene, nämlich die Oberseite und die Seitenwand, gewährleistet eine besonders zuverlässige Anordnung des Anschlusselements an der Sitzschiene. Das Anschlusselement selbst weist seinerseits einen Verbindungsabschnitt auf, der zur Aufnahme des zur Verbindung mit der Sitzschiene vorgesehenen Funktionsbauteils ausgebildet ist. Aufgrund der Möglichkeit, den Verbindungsabschnitt unabhängig von der Sitzschiene an beliebiger Stelle an dem Anschlusselement auszubilden, kann das Packmaß einer Sitzverstelleinrichtung - worunter der Abstand zwischen der Unterkante der Bodenschiene und des H-Punktes verstanden wird - gegenüber bekannten Sitzverstelleinrichtungen in erheblicher Weise reduziert werden. Darüber hinaus verstärkt das Anschlusselement den Bereich der Sitzschiene, über den im Falle eines Unfalls die crashbedingt auftretenden Belastungen in die Sitzschiene eingeleitet werden, wodurch einem strukturellen Versagen der Sitzschiene in besonderer Weise vorgebeugt werden kann.

Das Anschlusselement kann unter Berücksichtigung der auf die Sitzschiene abgestimmten Verbindungsabschnitte und in Abhängigkeit von dem anzuordnenden Anschlusselement dimensioniert werden. Dabei gleicht das Anschlusselement im Falle dessen Anbindung mit einem Eingriff in die Struktur der Sitzschiene, wie dies bspw. beim Nieten oder Schrauben der Fall ist, die sich hierbei ergebende strukturelle Schwächung aus. Darüber hinaus ermöglicht es das Anschlusselement über die frei wählbare Anordnung des Verbindungsabschnittes, eine Positionierung des Funktionsbauteils unabhängig von der Struktur der Sitzschiene vorzunehmen. Ein weiterer Vorteil des Anschlusselements besteht darin, dass aufgrund der verteilten, über das Anschlusselement erfolgten Lasteinleitung die zur Führung der Sitzschiene an einer Bodenschiene verwendeten Gleit- und/oder Rollkörper einer gleichmäßigen Flächenpressung unterliegen.

Die Ausgestaltung des Anschlusselements derart, dass es die Anbindung eines Funktionsbauteils, insbesondere einer Schwinge ermöglicht, ist grundsätzlich frei wählbar. Nach einer besonders vorteilhaften Ausgestaltung der Erfindung weist das Anschlusselement jedoch eine Öffnung zur Aufnahme des Funktionsbauteils und/oder eines Lagerelements zur Anordnung des Funktionsbauteils auf. Gemäß dieser Ausgestaltung der Erfindung ist in dem Verbindungsabschnitt eine Öffnung angeordnet, welche eine unmittelbare Anordnung des Funktionsbauteils und/oder die Anbindung eines Lagerelementes ermöglicht, über welches das Funktionsbauteil ggf. gelenkig mit dem Anschlusselement verbunden werden kann. Die Öffnung lässt sich dabei in beliebiger Weise und in beliebiger Form unter Berücksichtigung des zu verbindenden Funktionsbauteils ausgestalten. So kann die Öffnung sowohl zur gelenkigen Anordnung ausgebildet sein aber auch durch eine bspw. polygonale Ausgestaltung der Öffnung eine starre Befestigung ermöglichen.

Das Anschlusselement ist über die Seitenwand sowie die Oberseite der Sitzschiene mit dieser verbunden. Die Verbindungsart kann dabei grundsätzlich frei gewählt werden, wobei bspw. das Anschlusselement auch an die Sitzschiene angeschweißt oder angeklebt sein kann. Nach einer besonders vorteilhaften Ausgestaltung der Erfindung ist das Anschlusselement jedoch abschnittsweise formschlüssig mit der Sitzschiene verbunden. Gemäß dieser Ausgestaltung weist der erste und/oder zweite Abschnitt des Anschlusselements Bereiche auf, welche formschlüssig mit der Seitenwand bzw. Oberseite zusammenwirken. So können an dem ersten und/oder zweiten Abschnitt bspw. Vorsprünge angeordnet sein, welche in entsprechenden Ausnehmungen oder Öffnungen an der Oberseite oder Seitenwand der Sitzschiene eingreifen, wodurch eine besonders zuverlässige Anbindung des Anschlusselementes an der Sitzschiene realisiert werden kann. Die formschlüssige Verbindung kann dabei zur alleinigen Anbindung des Anschlusselements verwendet werden, aber auch mit anderen Verbindungsarten kombiniert werden.

Wie bereits zuvor dargestellt, kann auch im Falle der formschlüssigen Anbindung des Anschlusselements an der Sitzschiene dieses hierzu in beliebiger Weise ausgestaltet sein. Nach einer besonders vorteilhaften Ausgestaltung der Erfindung weist das Anschlusselement jedoch einen in einer Ausnehmung in der Seitenwand der Sitzschiene angeordneten Vorsprung auf. Ausnehmungen können durch in die Oberfläche der Sitzschiene eingebrachte Vertiefungen oder aber auch durch die Oberseite und/oder Seitenwand durchdringende Öffnungen gebildet sein. Diese Ausgestaltung der Erfindung gewährleistet eine besonders zuverlässige Anordnung des Anschlusselements in Längsachsenrichtung der Sitzschiene sowie in - bezogen auf die Einbaulage im Kraftfahrzeug - vertikaler Richtung.

Die Anordnung des Vorsprungs an dem Anschlusselement kann entsprechend der zu erwartenden Belastungen sowie konstruktiven Rahmenbedingungen frei gewählt werden. Nach einer besonders vorteilhaften Ausgestaltung der Erfindung ist der Vorsprung jedoch im Bereich des Verbindungsabschnitts des Anschlusselements angeordnet. Gemäß dieser Ausgestaltung der Erfindung dient der Vorsprung neben der reinen Festlegung des Anschlusselements an der Sitzschiene zudem zumindest bereichsweise zur Ausgestaltung des Verbindungsabschnitts des Anschlusselements für das Funktionsbauteil. Der Vorsprung erfüllt dabei eine Verstärkungsfunktion des Verbindungsabschnitts. Gleichzeitig resultiert aus der nicht allein flächigen Anlage des Verbindungsabschnitts an der Sitzschiene eine besonders gleichmäßige Kraftübertragung von dem Funktionsbauteil über das Anschlusselement auf die Sitzschiene.

Die Ausgestaltung des Anschlusselements derart, dass es mit dem ersten Abschnitt an der Seitenwand der Sitzschiene und mit dem zweiten Abschnitt mit der Oberseite der Sitzschiene verbunden ist, ist grundsätzlich frei wählbar. So kann das Anschlusselement bspw. durch einen entsprechend L-förmigen abgewinkelten Formkörper gebildet sein, der zwei im Wesentlichen rechtwinklig zueinander verlaufende Anlageflächen aufweist.

Gemäß dieser Ausgestaltung der Erfindung ist das Anschlusselement durch einen im Wesentlichen ebenen Körper gebildet. Der Grundkörper des Anschlusselements, welcher die Grundebene des Anschlusselements vorgibt, liegt mit einer parallel zur Grundebene verlaufenden Anlagefläche an der Seitenwand der Sitzschiene an. Zur Anordnung des Anschlusselements an der Oberseite der Sitzschiene erstreckt sich ausgehend von einem die Oberseite der Sitzschiene übertragenden Bereich des Grundkörpers ein Steg, wobei dieser derart versetzt zur Ebene des Grundkörpers, nämlich der Grundebene, verläuft, dass dieser mit einer senkrecht zur Grundebene verlaufenden Innenkante auf der Oberseite aufliegt. Durch diese Ausgestaltung des Anschlusselements wird eine besonders hohe Stabilität gewährleistet und zudem eine Verformung des Anschlusselements zuverlässig vermieden.

Nach einer besonders vorteilhaften Ausgestaltung der Erfindung schließen sich an den Grundkörper an gegenüberliegenden Seiten zwei versetzt zur Grundebene verlaufende Stege an, die mit ihren Innenkanten an der Oberseite anliegen. Gemäß dieser Ausgestaltung der Erfindung, bei der sich die Stege flügelartig von dem Grundkörper in gegenüberliegende Richtungen erstrecken und auf der Oberseite der Sitzschiene aufliegen, wird eine besonders zuverlässige Kraftübertragung von dem Anschlusselement auf die Oberseite der Sitzschiene gewährleistet. Die Länge der Stege kann dabei in Abhängigkeit von den konstruktiven Vorgaben frei gewählt werden. Dabei ist grundsätzlich auch eine asymmetrische Dimensionierung der Stege, wonach ein Steg eine höhere Länge aufweist als der andere Steg, möglich.

Wie bereits an obiger Stelle ausgeführt, weist das Anschlusselement zur Anordnung an der Seitenwand der Sitzschiene einen Grundkörper auf, welcher mit einer parallel zu dessen Grundebene verlaufenden Anlagefläche an der Seitenwand anliegt. Die Form des Grundkörpers ist dabei grundsätzlich frei wählbar. So kann dieser bspw. eine quadratische, rechteckige oder beliebige polygonale Form aufweisen. Nach einer besonders vorteilhaften Ausgestaltung der Erfindung schließen sich an gegenüberliegenden Seiten des Grundkörpers zwei in der Grundebene verlaufende Laschen an den Grundkörper an. Die Laschen gewährleisten eine besonders zuverlässige Abstützung des Anschlusselements an der Seitenwand der Sitzschiene. Besonders vorteilhafterweise erstrecken sich die Laschen dabei in Längsachsenrichtung der Sitzschiene. Wie auch die an der Oberseite der Sitzschiene anliegenden Stege, können auch die Laschen symmetrisch oder asymmetrisch ausgebildet sein, was in besonderer Weise eine Anpassung des Anschlusselements an die konstruktiven Vorgaben erlaubt.

Die Herstellung des Anschlusselements mit seinem ersten und zweiten Abschnitt kann grundsätzlich in beliebiger Weise erfolgen. So kann das Anschlusselement auch aus unterschiedlichen Bauteilen zusammengesetzt sein. Nach einer besonders vorteilhaften Ausgestaltung der Erfindung ist das Anschlusselement jedoch einstückig ausgebildet. Die einstückige Ausbildung gewährleistet eine besonders hohe Stabilität des Anschlusselements. Besonders vorteilhafterweise ist das Anschlusselement dabei aus einem Stahlblech gebildet, welches durch geeignete Biegeprozesse entsprechend ausgestaltet ist. Neben der hohen Stabilität des Anschlusselements zeichnet sich diese Ausgestaltung der Erfindung ferner dadurch aus, dass sich das Anschlusselement in besonders einfacher und kostengünstiger Weise herstellen lässt.

Grundsätzlich ist die Ausbildung der Sitzschiene, wie auch der Bodenschiene, frei wählbar. So kann diese aus beliebigen Materialien und unter Anwendung beliebiger Herstellungsprozesse gebildet sein. Nach einer besonders vorteilhaften Ausgestaltung der Erfindung ist die Sitzschiene jedoch aus einem gebogenen Flachmaterial, insbesondere Stahlblech gebildet. Besonders bevorzugt weist die Sitzschiene darüber hinaus ein durch Biegeprozesse hergestelltes U-Profil auf, welches in einer, vorzugsweise ebenfalls aus einem Flachmaterial gebildeten, einen U-förmigen Querschnitt aufweisenden Bodenschiene verschiebbar angeordnet ist. Eine entsprechend ausgebildete Sitzschiene zeichnet sich durch ihre hohe Stabilität, geringen Bauraum sowie geringes Gewicht aus. Die relativ freie Wahl der Biegeprozesse gewährleistet dabei eine besonders zuverlässige Anbindung der Sitzschiene an die Bodenschiene, welche die Funktion der Längsverstelleinrichtung in besonderer Weise gewährleisten.

Die Positionierung der Öffnung an dem Anschlusselement relativ gegenüber der Sitzschiene ist grundsätzlich frei wählbar. Nach einer weiteren Ausgestaltung der Erfindung ist die Öffnung zur Aufnahme des Funktionsbauteils und/oder Lagerelements jedoch im Bereich einer im Bereich einer Biegelinie zwischen der Seitenwand und der Oberseite verlaufenden Ausnehmung angeordnet. Die Verwendung des erfindungsgemäßen Anschlusselements ermöglicht es auch bei einer aus einem Stahlblech hergestellten Sitzschiene, das Funktionsbauteil im Bereich der Biegelinie zwischen der Seitenwand und der Oberseite der Sitzschiene anzuordnen. Dabei verläuft die hierfür vorgesehene Öffnung an dem Anschlusselement im Bereich einer an dieser Stelle angeordneten Ausnehmung. Das Anschlusselement gewährleistet somit die sichere Anbindungsmöglichkeit des Funktionsbauteils, insbesondere einer Schwinge, in einem Bereich, nämlich der Biegelinie, der ohne die Verwendung eines Anschlusselements nicht zur Verbindung geeignet wäre. Darüber hinaus wird, insbesondere bei einer seitlichen Anordnung der Schwingen, eine Kollision mit an der Bodenschiene angeordneten Blendenelementen, bspw. Kunststoffabdeckungen, wie sie aus dem Stand der Technik bekannt sind, vermieden. Die Öffnung kann dabei insbesondere korrespondierend mit der Ausnehmung ausgebildet sein, wodurch die Anbindung eines Lageelements möglich ist, das sich durch die Öffnung und die Ausnehmung hindurch erstreckt. Die Anordnung im Bereich der Biegelinie weist gegenüber - bezogen auf die Einbaulage im Kraftfahrzeug - einer in Richtung zum Fahrzeugboden versetzten Anordnung eine höhere Stabilität auf, wobei insbesondere einer belastungsbedingten Verschiebung der Seitenwand in Richtung auf den durch Sitzschiene und Bodenschiene gebildeten Hohlraum in besonderer Weise vorgebeugt wird.

Im Falle der Anordnung eines Vorsprungs ist nach einer besonders vorteilhaften Ausgestaltung der Erfindung dieser in einer im Bereich der Biegelinie zwischen der Seitenwand und der Oberseite verlaufenden Ausnehmung angeordnet. Gemäß dieser Ausgestaltung der Erfindung erstreckt sich der Vorsprung durch bzw. in die Ausnehmung, welche im Biegebereich in der aus einem Flachmaterial hergestellten Sitzschiene verläuft. Der Vorsprung und die Ausnehmung weisen dabei vorzugsweise eine aufeinander abgestimmte Form auf, wobei neben einer kreisförmigen Ausgestaltung auch eine polygonale Ausgestaltung möglich ist, welche eine besonders zuverlässige formschlüssige Anordnung des Anschlusselements über den Vorsprung in der Ausnehmung ermöglicht.

Besonders vorteilhafterweise ist dabei zudem der Vorsprung zur Aufnahme des Funktionsbauteils und/oder eines Lagerelements zur Anordnung des Funktionsbauteils, insbesondere eines Lagerbolzens ausgebildet, wobei besonders bevorzugt der Vorsprung die Öffnung zur Verbindung des Funktionsbauteils aufweist. Insofern dient der Vorsprung nicht allein der formschlüssigen Anordnung, sondern übernimmt überdies Lagerungsfunktionen, wobei der Vorsprung entsprechend des anzuordnenden Funktionsbauteils bzw. eines Lagerelements ausgebildet ist. So kann der Vorsprung bspw. eine Aufnahmeöffnung aufweisen, in welche bspw. einen Lagerbolzen eingepresst oder eingeschraubt wird. Die Anordnung des Vorsprungs im Bereich der Biegelinie gewährleistet dabei - wie bereits zuvor dargelegt - aufgrund der Krafteinleitung in diesem Bereich eine besonders hohe Stabilität.

Nach einer weiteren Ausgestaltung der Erfindung ist an dem Lagerelement, insbesondere einem Lagerbolzen, eine Lagerbuchse angeordnet. Diese Ausgestaltung der Erfindung zeichnet sich durch die Möglichkeit einer gelenkigen Anordnung eines Anschlusselements aus, wobei die Lagerbuchse eine besonders gleitarme Relativbewegung des Funktionsbauteils an dem Anschlusselement ermöglicht.

Nachfolgend wird ein Ausführungsbeispiel der Erfindung mit Bezug auf die Zeichnungen erläutert. In den Zeichnungen zeigen:
- Fig. 1: eine Skizze einer perspektivischen Ansicht einer Verstelleinrichtung mit einem an einer Sitzschiene angeordneten Anschlusselement;
- Fig. 2: eine Skizze einer perspektivischen Ansicht einer Versteileinrichtung von Fig. 1 ohne Anschlusselement;
- Fig. 3: eine Skizze einer Draufsicht auf die Verstelleinrichtung von Fig. 1;
- Fig. 4: eine Skizze einer Vorderansicht der Verstelleinrichtung von Fig. 1 und
- Fig. 5: eine Skizze eines Schnitts der Verstelleinrichtung von Fig. 1 durch das Anschlusselement mit einer an dem Anschlusselement angeordneten Schwinge.

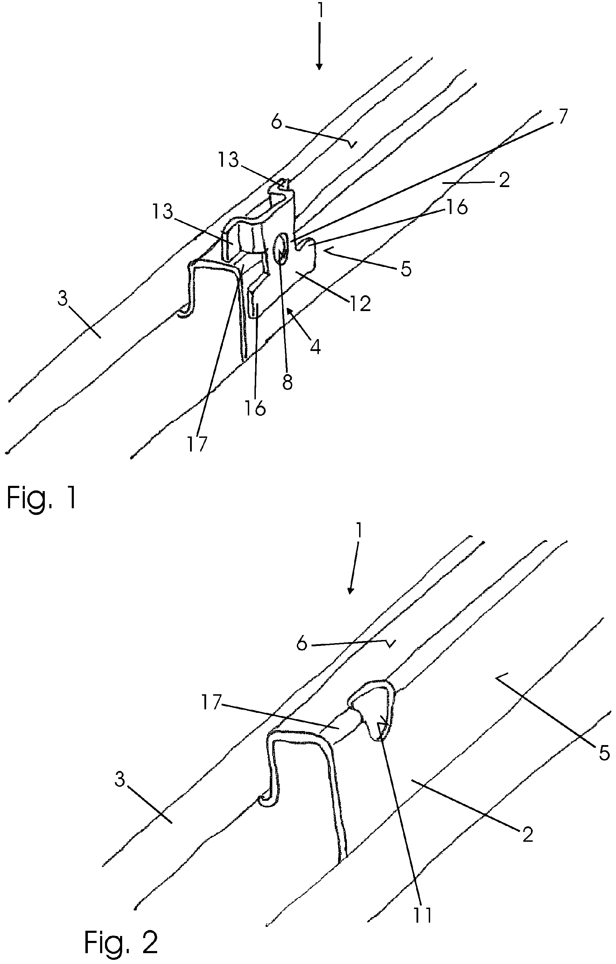

In Fig. 1 ist ein Abschnitt einer eine Sitzschiene 2 und eine Bodenschiene 3 aufweisenden Längsverstelleinrichtung 1 skizziert. Zur längsverstellbaren Anordnung eines hier nicht dargestellten Kraftfahrzeugsitzes ist die mit dem Kraftfahrzeugsitz verbindbare Sitzschiene 2 längsverschiebbar an der mit dem Fahrzeugboden verbindbaren Bodenschiene 3 gelagert. Die Längsverstellbarkeit der Sitzschiene 2 gegenüber der Bodenschiene 3 ermöglicht somit einem Nutzer eine Anpassung der Position des Kraftfahrzeugsitzes im Kraftfahrzeug.

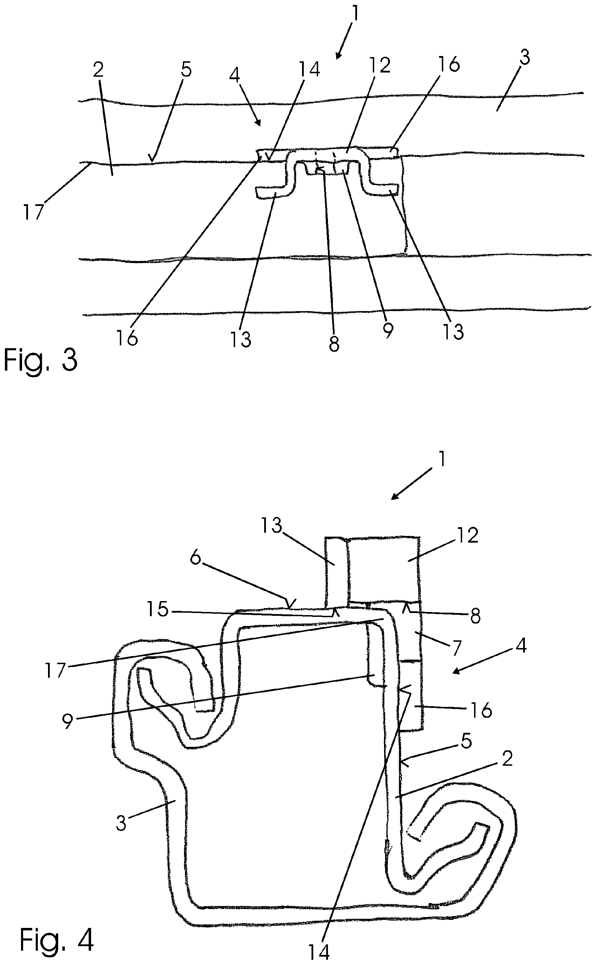

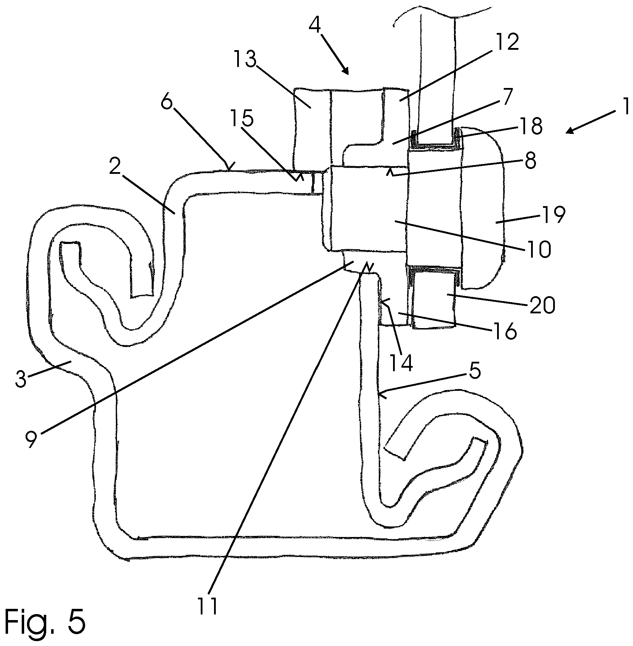

Die Sitzschiene 2 und die Bodenschiene 3 sind aus einem U-förmig gebogenen Blechprofil gebildet, wobei deren Biegeverlauf derart ausgestaltet ist, dass die im Querschnitt freien Enden der Schienen 2, 3 ineinander greifen, wodurch die Sitzschiene 2 verschiebbar aneinander festgelegt sind. Eine Längseinstellung des hier nicht dargestellten Kraftfahrzeugsitzes gegenüber dem Fahrzeugboden erfolgt über eine Längsverstellung der Sitzschiene 2 gegenüber der Bodenschiene 3, wobei diese nur in bestimmten Führungsbereichen über hier nicht dargestellte Rollkörper miteinander in Kontakt stehen, durch die die Sitzschiene 2 gegenüber der Bodenschiene 3 festgelegt ist. Im übrigen Bereich sind die Bodenschiene 3 und die Sitzschiene 2 aufgrund der Lagerung über die Rollkörper im Abstand voneinander angeordnet (vgl. Fig. 2-Fig. 5).

Die mit einer Oberseite 6 mit einem Kraftfahrzeugsitz verbindbare Sitzschiene 2 weist im Bereich ihres - bezogen auf die Einbaulage am Kraftfahrzeug - hinteren Endes ein Anschlusselement 4 auf, welches die Anbindung von Funktionsbauteilen, bspw. einer Schwinge 20 an einem Verbindungsabschnitt 7 des Anschlusselements 4 ermöglicht.

Zur Verbindung des Anschlusselements 4 mit der Sitzschiene 2 weist die Sitzschiene 2 eine Ausnehmung 11 auf, die im Bereich der Biegelinie 17 zwischen der Seitenwand 5 und der Oberseite 6 der aus einem Stahlblech gebildeten Sitzschiene 2 angeordnet ist. Das Anschlusselement 4 weist seinerseits einen Vorsprung 9 auf, welcher an die Ausnehmung 11 angepasst ist, so dass der Vorsprung 9 in der montierten Lage des Anschlusselements 4 an der Sitzschiene 2 innerhalb der Ausnehmung 11 angeordnet ist, wobei dies auch berührungslos erfolgen kann.

Darüber hinaus weist das Anschlusselement 4 einen Grundkörper 12 auf, der sich in einer im Wesentlichen parallel zur Seitenwand 5 verlaufenden Grundebene erstreckt. Mit einer Anlagefläche 14 liegen der Grundkörper 12 sowie sich in Längsachsenrichtung der Sitzschiene 2, ausgehend von dem Grundkörper 12, erstreckende Laschen 16 an der Seitenwand 5 der Sitzschiene 2 an.

Der Grundkörper 12 erstreckt sich ferner in der Einbaulage an der Sitzschiene 2 - bezogen auf die Einbaulage im Kraftfahrzeug - abschnittsweise über die Oberseite 6 der Sitzschiene 2 hinaus. In diesem Bereich schließen sich an den Grundkörper 12 - bezogen auf die Längsachsenrichtung der Sitzschiene 2 - an gegenüberliegenden Kanten zwei Stege 13 an, die versetzt zur Grundebene des Grundkörpers 12 verlaufen, so dass diese mit ihren Innenkanten 15 auf der Oberseite 6 der Sitzschiene 2 aufliegen.

In dem Verbindungsbereich 7, der zur Anordnung des Funktionsbauteils an dem Anschlusselement 4 dient, weist dieses den Vorsprung 9 auf, der sich in der montierten Lage an der Sitzschiene 2 durch die Ausnehmung 11 an der Sitzschiene 2 erstreckt. Zur Aufnahme des an der Sitzschiene 2 anzuordnenden Funktionsbauteils, bspw. einer Schwinge 20 weist der Vorsprung 9 ferner eine Öffnung 8 auf, die sich durch das Anschlusselement 4 erstreckt. Die Öffnung 8 dient zur Aufnahme eines als Lagerbolzen 10 ausgebildeten Lagerelements, an dem eine Schwinge 20 gelenkig angeordnet ist. Um dabei eine reibungsfreie Lagerung der Schwinge 20 zu gewährleisten, ist in einem Bereich zwischen dem Anschlusselement 4 und einem Bolzenkopf 19 eine Lagerbuchse 18 angeordnet.

## Patentansprüche

1. Längsverstelleinrichtung für einen Kraftfahrzeugsitz, mit
einer mit einem Kraftfahrzeugboden verbindbaren Bodenschiene (3) und einer mit dem Kraftfahrzeugsitz verbindbaren Sitzschiene (2), die längsverschiebbar an der Bodenschiene (3) gelagert ist und ein einen Verbindungsabschnitt (7) aufweisendes Anschlusselement (4) zur Verbindung eines Funktionsbauteils mit der Sitzschiene (2) aufweist, wobei das Anschlusselement (4) mit einem ersten Abschnitt mit einer Seitenwand (5) der Sitzschiene (2) und mit einem zweiten Abschnitt mit einer Oberseite (6) der Sitzschiene (2) verbunden ist, wobei das Anschlusselement (4) eine Öffnung (8) zur Aufnahme des Funktionsbauteils und/oder eines Lagerelements (10) zur Anordnung des Funktionsbauteils aufweist, wobei die Öffnung (8) im Bereich einer im Bereich einer Biegelinie (17) zwischen der Seitenwand (5) und der Oberseite (6) verlaufenden Ausnehmung (11) angeordnet ist und die Öffnung (8) korrespondierend mit der Ausnehmung (11) ausgebildet ist, wodurch die Anbindung eines Funktionsbauteils und/oder eines Lageelements (10) möglich ist das sich durch die Öffnung (8) und die Ausnehmung (11) im Bereich der Biegelinie (17) hindurch erstreckt
**dadurch gekennzeichnet,**
**dass** das Anschlusselement (4) einen den ersten Abschnitt aufweisenden Grundkörper (12) mit einer Grundebene und einen sich an den Grundkörper (12) anschließenden, versetzt zur Grundebene verlaufenden, den zweiten Abschnitt aufweisenden Steg (13) aufweist, wobei der Grundkörper (12) mit einer parallel zur Grundebene verlaufenden Anlagefläche (14) an der Seitenwand (5) und der Steg (13) mit einer senkrecht zur Grundebene verlaufenden Innenkante (15) an der Oberseite (6) anliegt.

2. Längsverstelleinrichtung nach Anspruch 1, **dadurch gekennzeichnet, dass** das Anschlusselement (4) abschnittsweise formschlüssig mit der Sitzschiene (2) verbunden ist.

3. Längsverstelleinrichtung nach einem der vorhergehenden Ansprüche, **dadurch gekennzeichnet, dass** das Anschlusselement (4) einen in einer Ausnehmung (11) in der Seitenwand (5) der Sitzschiene (2) angeordneten Vorsprung (9) aufweist.

4. Längsverstelleinrichtung nach einem der vorhergehenden Ansprüche, **dadurch gekennzeichnet, dass** der Vorsprung (9) im Bereich des Verbindungsabschnitts (7) des Anschlusselements (4) angeordnet ist.

5. Längsverstelleinrichtung nach einem der vorhergehenden Ansprüche, **dadurch gekennzeichnet, dass** sich an gegenüberliegenden Seiten des Grundkörpers (12) an diesen zwei versetzt zur Grundebene verlaufende Stege (13) anschließen, die mit ihren Innenkanten (15) an der Oberseite (6) anliegen.

6. Längsverstelleinrichtung nach einem der vorhergehenden Ansprüche, **dadurch gekennzeichnet, dass** sich im Bereich des ersten Abschnitts an gegenüberliegenden Seiten des Grundkörpers (12) zwei in der Grundebene verlaufende Laschen (16) an den Grundkörper (12) anschließen.

7. Längsverstelleinrichtung nach einem der vorhergehenden Ansprüche, **dadurch gekennzeichnet, dass** das Anschlusselement (4) einstückig ausgebildet ist.

8. Längsverstelleinrichtung nach einem der vorhergehenden Ansprüche, **dadurch gekennzeichnet, dass** die Sitzschiene (2) aus einem gebogenen Flachmaterial, insbesondere Stahlblech, gebildet ist.

9. Längsverstelleinrichtung nach einem der vorhergehenden Ansprüche, **dadurch gekennzeichnet, dass** der Vorsprung (9) in der im Bereich der Biegelinie (17) zwischen der Seitenwand (5) und der Oberseite (6) verlaufenden Ausnehmung (11) angeordnet ist.

10. Längsverstelleinrichtung nach einem der vorhergehenden Ansprüche, **dadurch gekennzeichnet, dass** der Vorsprung (9) zur Aufnahme des Funktionsbauteils und/oder eines Lagerelements (10) zur Anordnung des Funktionsbauteils, insbesondere eines Lagerbolzens, ausgebildet ist und insbesondere die Öffnung (8) aufweist.

## Claims

1. Longitudinal adjustment device for a motor vehicle seat, comprising
a floor rail (3) which is connectable to a motor vehicle floor and a seat rail (2) which is connectable to the motor vehicle seat and is mounted on the floor rail (3) in a longitudinally displaceable manner and has an attachment element (4), which has a connecting section (7), for connecting a functional component to the seat rail (2), wherein the attachment element (4) is connected by a first section to a side wall (5) of the seat rail (2) and by a second section to an upper side (6) of the seat rail (2), wherein the attachment element (4) has an opening (8) for receiving the functional component and/or for receiving a bearing element (10) for arrangement of the functional component, wherein the opening (8) is arranged in the region of a recess (11) running in the region of a bending line (17) between the side wall (5) and the upper side (6), and the opening (8) is formed in a manner corresponding to the recess (11), thereby enabling the attachment of a functional component and/or a bearing element (10) extending through the opening (8) and the recess (11) in the region of the bending line (17),
**characterized**
**in that** the attachment element (4) has a main body (12) having the first section and having a main plane, and a web (13) which is attached to the main body (12), runs offset with respect to the main plane and has the second section, wherein the main body (12) lies against the side wall (5) with a contact surface (14) running parallel to the main plane, and the web (13) lies against the upper side (6) with an inner edge (15) running perpendicularly to the main plane.

2. Longitudinal adjustment device according to Claim 1, **characterized in that** the attachment element (4) is connected in certain sections to the seat rail (2) in an interlocking manner.

3. Longitudinal adjustment device according to either of the preceding claims, **characterized in that** the attachment element (4) has a projection (9) arranged in a recess (11) in the side wall (5) of the seat rail (2) .

4. Longitudinal adjustment device according to one of the preceding claims, **characterized in that** the projection (9) is arranged in the region of the connecting section (7) of the attachment element (4) .

5. Longitudinal adjustment device according to one of the preceding claims, **characterized in that** two webs (13) which run offset with respect to the main plane and lie against the upper side (6) with their inner edges (15) are attached to the main body (12) on opposite sides thereof.

6. Longitudinal adjustment device according to one of the preceding claims, **characterized in that** two tabs (16) running in the main plane are attached to the main body (12) in the region of the first section on opposite sides of the main body (12).

7. Longitudinal adjustment device according to one of the preceding claims, **characterized in that** the attachment element (4) is formed integrally.

8. Longitudinal adjustment device according to one of the preceding claims, **characterized in that** the seat rail (2) is formed from a curved flat material, in particular steel plate.

9. Longitudinal adjustment device according to one of the preceding claims, **characterized in that** the projection (9) is arranged in the recess (11) running in the region of the bending line (17) between the side wall (5) and the upper side (6).

10. Longitudinal adjustment device according to one of the preceding claims, **characterized in that** the projection (9) is designed for receiving the functional component and/or a bearing element (10) for arrangement of the functional component, in particular a bearing bolt, and in particular has the opening (8) .

## Revendications

1. Dispositif de réglage en longueur pour un siège de véhicule automobile, comprenant
un rail de sol (3) pouvant être connecté à un sol de véhicule automobile et un rail de siège (2) pouvant être connecté au siège de véhicule automobile, qui est supporté de manière déplaçable longitudinalement sur le rail de sol (3) et qui présente un élément de raccordement (4) présentant une portion de liaison (7) pour la liaison d'un composant fonctionnel au rail de siège (2), l'élément de raccordement (4) étant connecté par une première portion à une paroi latérale (5) du rail de siège (2) et par une deuxième portion à un côté supérieur (6) du rail de siège (2), l'élément de raccordement (4) présentant une ouverture (8) pour recevoir le composant fonctionnel et/ou un élément de palier (10) pour le positionnement du composant fonctionnel, l'ouverture (8) étant disposée dans la région d'un évidement (11) s'étendant dans la région d'une ligne de courbure (17) entre la paroi latérale (5) et le côté supérieur (6) et l'ouverture (8) étant réalisée de manière à correspondre à l'évidement (11), de sorte que le raccordement d'un composant fonctionnel et/ou d'un élément de palier (10) soit possible, lequel s'étend à travers l'ouverture (8) et l'évidement (11) dans la région de la ligne de courbure (17),
**caractérisé en ce que**
l'élément de raccordement (4) présente un corps de base (12) présentant la première portion avec un plan de base, et une nervure (13) présentant la deuxième portion, se raccordant au corps de base (12) et s'étendant de manière décalée par rapport au plan de base, le corps de base (12) s'appliquant avec une surface d'appui (14) s'étendant parallèlement au plan de base contre la paroi latérale (5) et la nervure (13) s'appliquant avec une arête intérieure (15) s'étendant perpendiculairement au plan de base contre le côté supérieur (6).

2. Dispositif de réglage en longueur selon la revendication 1, **caractérisé en ce que** l'élément de raccordement (4) est connecté en partie par engagement par correspondance de formes au rail de siège (2).

3. Dispositif de réglage en longueur selon l'une quelconque des revendications précédentes, **caractérisé en ce que** l'élément de raccordement (4) présente une saillie (9) disposée dans un évidement (11) dans la paroi latérale (5) du rail de siège (2).

4. Dispositif de réglage en longueur selon l'une quelconque des revendications précédentes, **caractérisé en ce que** la saillie (9) est disposée dans la région de la portion de liaison (7) de l'élément de raccordement (4).

5. Dispositif de réglage en longueur selon l'une quelconque des revendications précédentes, **caractérisé en ce que** deux nervures (13) s'étendant de manière décalée par rapport au plan de base se raccordent au corps de base (12) au niveau de côtés opposés de celui-ci, lesquelles s'appliquent avec leurs arêtes intérieures (15) contre le côté supérieur (6).

6. Dispositif de réglage en longueur selon l'une quelconque des revendications précédentes, **caractérisé en ce que** deux pattes (16) s'étendant dans le plan de base se raccordent au corps de base (12) dans la région de la première portion au niveau de côtés opposés du corps de base (12).

7. Dispositif de réglage en longueur selon l'une quelconque des revendications précédentes, **caractérisé en ce que** l'élément de raccordement (4) est réalisé d'une seule pièce.

8. Dispositif de réglage en longueur selon l'une quelconque des revendications précédentes, **caractérisé en ce que** le rail de siège (2) est formé d'un matériau plat recourbé, en particulier d'une tôle d'acier.

9. Dispositif de réglage en longueur selon l'une quelconque des revendications précédentes, **caractérisé en ce que** la saillie (9) est disposée dans l'évidement (11) s'étendant dans la région de la ligne de courbure (17) entre la paroi latérale (5) et le côté supérieur (6).

10. Dispositif de réglage en longueur selon l'une quelconque des revendications précédentes, **caractérisé en ce que** la saillie (9) est réalisée pour recevoir le composant fonctionnel et/ou un élément de palier (10) pour le positionnement du composant fonctionnel, en particulier d'un boulon de palier, et présente en particulier l'ouverture (8) .
